# EUROPÄISCHE PATENTSCHRIFT

(11) **EP 2 650 994 B1**
(45) Veröffentlichungstag und Bekanntmachung des Hinweises auf die Patenterteilung: **30.08.2017**
(21) Anmeldenummer: 13163346.3
(22) Anmeldetag: 11.04.2013
(51) Int. Cl.: H02G 3/12, H01R 13/74

(54) **STECKDOSEN-ANORDNUNG FÜR GERÄTEEINBAUKANÄLE MIT EINER HALTESCHIENE AM KANALBODEN SOWIE GERÄTEEINBAUKANAL, DER EINE DERARTIGE STECKDOSEN-ANORDNUNG UMFASST**
SOCKET ASSEMBLY FOR DEVICE INSTALLATION ASSEMBLIES WITH A HOLDING RAIL AT THE CHANNEL BASE AND DEVICE INSTALLATION CHANNEL COMPRISING SUCH A SOCKET ASSEMBLY
AGENCEMENT DE PRISES POUR CANAUX D'INTÉGRATION D'APPAREILS AVEC RAIL DE MAINTIEN SUR LE FOND DU CANAL ET CANAL D'INTÉGRATION D'APPAREILS COMPRENANT UN TEL AGENCEMENT DE PRISES

(30) Priorität: 13.04.2012 DE 202012101349 U
(43) Veröffentlichungstag der Anmeldung: 16.10.2013
(73) Patentinhaber: REHAU AG + Co, 95111 Rehau (DE)
(72) Erfinder: Friedrich, Jochen, 95119 Naila (DE); Salzhuber, Frank, 90419 Nürnberg (DE); Thaler, Roland, 70567 Stuttgart (DE); Kalkus, Berthold, 57399 Kirchhunden (DE)

(56) Entgegenhaltungen:
- EP-A1- 1 073 173
- EP-A2- 0 240 916
- DE-A1- 4 110 690
- DE-U1-202010 016 144
- US-A1- 2009 261 816

## Beschreibung

Die vorliegende Erfindung betrifft eine Steckdosen-Anordnung für Geräteeinbaukanäle sowie einen Geräteeinbaukanal, der eine derartige Steckdosen-Anordnung umfasst.

Derartige Steckdosen-Anordnungen sind aus dem Stand der Technik bekannt. Beispielsweise beschreibt die DE 299 08 351 U1 eine derartige Steckdosen-Anordnung für einen Geräteeinbaukanal, wobei der Geräteeinbaukanal an seiner offenen Oberseite einen Anlage- und Halteabschnitt aufweist. Die Steckdose selbst ist in den Geräteeinbaukanal aufgenommen und an der offenen Oberseite des Geräteeinbaukanals über einen Abdeckrahmen festgelegt, der mit dem Anlage- und Halteabschnitt des Geräteeinbaukanals verbunden ist. Nachteilig wird daran gesehen, dass beim Festklemmen des Abdeckrahmens eine exakte Positionierung des Abdeckrahmens erschwert ist. Weitere derartige Steckdosen-Anordnungen sind aus der DE 20 2010 016 144 U1, der DE 41 10 690 A1 und der EP 1 073 173 A1 bekannt.

Darüber hinaus ist es bekannt, Abdeckungen bzw. Blenden für elektrische Einbaugeräte entweder gemäß beispielsweise der EP 1 168 557 B1 und der EP 0 240 916 A2 werkzeuglos an dem Einbaugerät oder unter Verwendung eines zusätzlichen Befestigungselements gemäß der EP 1 168 556 B1 an dem elektrischen Einbaugerät zu befestigen. Derartige werkzeuglos angebrachte Abdeckungen bzw. Blenden können auch ohne Werkzeug wieder entfernt werden oder die zusätzlichen Befestigungselemente müssen mittels eines Werkzeugs gelöst werden, bevor die Blende entfernt werden kann. Bei werkzeugloser Montage und Demontage ist eine Sicherung gegen unbefugtes Entfernen der Abdeckung bzw. Blende nicht gegeben. Beim Einsatz zusätzlicher Befestigungselemente ist ein erhöhter Montageaufwand sowie die Verwendung von Werkzeugen erforderlich.

Vor diesem Hintergrund liegt der vorliegenden Erfindung die Aufgabe zugrunde, eine Steckdosen-Anordnung für Geräteeinbaukanäle zur Verfügung zu stellen, die die Nachteile des Standes der Technik überwindet. Insbesondere soll die erfindungsgemäße Steckdosen-Anordnung einfach und werkzeuglos in einem Geräteeinbaukanal montierbar sein. Darüber hinaus soll die erfindungsgemäße Geräteeinbaudose die Möglichkeit bieten, nicht ohne den Einsatz eines Werkzeugs demontiert werden zu können und somit gegen unbefugtes Entfernen des Abdeckrahmens aus dem Geräteeinbaukanal sicher zu sein. Darüber hinaus liegt die vorliegende Erfindung in der Bereitstellung eines Geräteeinbaukanals, der eine erfindungsgemäße Steckdosen-Anordnung umfasst.

Diese und andere Aufgaben sind durch eine Steckdosen-Anordnung mit den Merkmalen des Anspruchs 1 bzw. durch einen Geräteeinbaukanal mit den Merkmalen des Anspruchs 7 gelöst. Bevorzugte Ausführungsformen der erfindungsgemäßen Steckdosen-Anordnung bzw. des erfindungsgemäßen Geräteeinbaukanals sind jeweils in den davon abhängigen Ansprüchen beschrieben.

Gemäß der vorliegenden Erfindung wurde erkannt, dass eine exakte, werkzeuglose Positionierung des Abdeckrahmens dann gewährleistet ist, wenn die Rastverbindung zwischen dem Abdeckrahmen und dem Steckdosentopf der Steckdoseneinheit erfolgt. Dementsprechend besteht die vorliegende Erfindung in der Bereitstellung einer Steckdosen-Anordnung für Geräteeinbaukanäle mit einer Halteschiene am Kanalboden, wobei die Steckdosen-Anordnung eine Steckdoseneinheit mit Steckdosensockel und damit verbundenem Steckdosentopf, vorzugsweise damit über eine Rastverbindung verbundenem Steckdosentopf, sowie einen Abdeckrahmen umfasst, der über eine Rastverbindung an der Steckdoseneinheit festlegbar ist, wobei die Rastverbindung entweder durch an den Abdeckrahmen angeformte Rastelemente erfolgt, die in entsprechende Rastaufnahmen des Steckdosentopfes eingreifen, oder durch an den Steckdosentopf angeformte Rastelemente erfolgt, die in entsprechende Rastaufnahmen des Abdeckrahmens eingreifen. Darüber hinaus liegt die vorliegende Erfindung in der Bereitstellung eines Geräteeinbaukanals mit einer Halteschiene am Kanalboden, der mindestens eine erfindungsgemäße Steckdosen-Anordnung für Geräteeinbaukanäle umfasst.

Hinsichtlich der erfindungsgemäßen Steckdosen-Anordnung hat es sich als besonders günstig erwiesen, wenn eine Steckdoseneinheit als vorverdrahtete, elektrische Netzsteckdose ausgebildet ist. Bei Einsatz einer vorverdrahteten, elektrischen Netzsteckdose kann unter Verwendung der erfindungsgemäßen Steckdosen-Anordnung eine besonders einfache, werkzeuglose Vorfixierung und schnelle Montage einer Steckdose in einen Geräteeinbaukanal erfolgen.

Es kann sich auch als günstig erweisen, wenn der Abdeckrahmen der erfindungsgemäßen Steckdosen-Anordnung zwei am Rand einer Öffnung des Abdeckrahmens einander diametral gegenüberliegende Führungselemente umfasst, die in entsprechende Führungsaufnahmen des Steckdosentopfes einführbar sind. Auf diese Weise ist gewährleistet, dass der Abdeckrahmen bei der Montage der erfindungsgemäßen Steckdosen-Anordnung in einem Geräteeinbaukanal an der richtigen Position der Steckdoseneinheit und in der richtigen Orientierung zu der Steckdoseneinheit erfolgt. Dadurch wird die Montage der erfindungsgemäßen Steckdosen-Anordnung in einem Geräteeinbaukanal weiter vereinfacht.

In diesem Zusammenhang kann es sich als besonders vorteilhaft erweisen, wenn die Rastelemente an den Führungselementen des Abdeckrahmens angeordnet sind. Bei dieser besonders bevorzugten Ausführungsform ist gewährleistet, dass die Rastverbindung zwischen dem Abdeckrahmen und der Steckdoseneinheit der erfindungsgemäßen Steckdosen-Anordnung einfach herzustellen ist und die richtige Position der Rastelemente zu den Rastaufnahmen nicht erst beispielsweise durch Drehen des Abdeckrahmens auf der Steckdoseneinheit gesucht werden muss. Auf diese Weise wird der Montageaufwand für die erfindungsgemäße Steckdosen-Anordnung in einem Geräteeinbaukanal weiter verringert.

Ebenso kann es sich als günstig erweisen, wenn die Rastaufnahmen des Steckdosentopfes zur Aufnahme der Rastelemente des Abdeckrahmens jeweils in einer Nut und besonders bevorzugt am Grund der Nut zwischen zwei Codierungselementen des Steckdosentopfes angeordnet sind. Durch diese spezielle Anordnung der Rastaufnahmen in der Nut zwischen zwei Codierungselementen des Steckdosentopfes ist gewährleistet, dass die Rastelemente des Abdeckrahmens nicht ohne den Einsatz eines Werkzeugs, beispielsweise eines Schraubendrehers, entfernt werden können. Der Zugang zu den Rastelementen und deren Betätigen ist durch eine derartige Anordnung ohne Werkzeug ausgeschlossen. Wie hierin verwendet bezeichnet der Begriff "Codierungselemente" bevorzugt an der Innenwand eines Steckdosentopfes angeordnete Elemente, wobei jeweils zwei dieser Codierungselemente eine Nut bilden, in der die Führungsleisten eines in den Steckdosentopf einzuführenden Steckers aufnehmbar sind. Dabei sind die Codierungselemente vorzugsweise derart am Innenumfang des Steckdosentopfes angeordnet, dass die beiden am Steckdosentopf einander diametral gegenüberliegenden Rastaufnahmen jeweils etwa mittig in den Nuten angeordnet sind.

Es kann auch von Nutzen sein, wenn die erfindungsgemäße Steckdosenanordnung weiter einen Farbcodierungsring umfasst, der den Steckdosentopf umringt. Dies ermöglicht eine farbige Kennzeichnung einzelner Steckdosen. Dabei ist es bevorzugt, wenn der Farbcodierungsring in einer Umrandung einer Öffnung des Abdeckrahmens aufgenommen ist. Dadurch ist eine optisch ansprechende Anordnung des Farbcodierungsrings in der erfindungsgemäßen Steckdosenanordnung gewährleistet. Vorzugsweise ist der Farbcodierungsring mit dem Abdeckrahmen verrastet und/oder am Steckdosentopf festgelgt.

Hinsichtlich des erfindungsgemäßen Geräteeinbaukanals ist es bevorzugt, dass die Steckdoseneinheit an ihrer dem Steckdosentopf gegenüberliegenden Seite mindestens ein Halteelement aufweist, durch das bzw. durch die die Steckdoseneinheit an der Halteschiene des Geräteeinbaukanals festlegbar ist. Auf diese Weise ist gewährleistet, dass die Steckdoseneinheit der erfindungsgemäßen Steckdosen-Anordnung exakt im erfindungsgemäßen Geräteeinbaukanal positioniert werden kann. In einer besonders bevorzugten Ausführungsform des erfindungsgemäßen Geräteeinbaukanals ist die Halteschiene als Hutschiene ausgebildet und die zwei Halteelemente der Steckdoseneinheit umgreifen die Hutschiene. Auf diese Weise ist die erfindungsgemäße Steckdosen-Anordnung leicht in dem erfindungsgemäßen Geräteeinbaukanal montierbar. Darüber hinaus ist ein sicheres Vorfixieren der Steckdoseneinheit der erfindungsgemäßen Steckdosen-Anordnung in dem erfindungsgemäßen Geräteeinbaukanal durch einfaches Aufrasten der Steckdoseneinheit auf die Hutschiene gewährleistet.

Zur Herstellung des Abdeckrahmens und der Steckdoseneinheit der erfindungsgemäßen Steckdosen-Anordnung hat sich Spritzguss als bevorzugte Art der Herstellung erwiesen. Polyvinylchlorid (PVC), Polyethylen (insbesondere HDPE), Polyamid (PA; insbesondere Polyamid-6 und Polyamid-6,6), Polypropylen (insbesondere statistisches Polypropylen PP-R) und Polycarbonat (PC) sowie Polycarbonat/Acrylnitril-Butadien-Styrol-Copolymerisat-Blends (PC-ABS) können als bevorzugte Materialien für die erfindungsgemäße Steckdosen-Anordnung eingesetzt werden. Während für erfindungsgemäße Geräteeinbaukanäle dieselben Materialien bevorzugt sind, werden diese in an sich bekannter Weise bevorzugt durch Extrusion hergestellt.

Im Folgenden soll die vorliegende Erfindung unter Bezugnahme auf die in den Figuren dargestellte Ausführungsform im Detail erläutert werden. Dabei zeigen:
- Fig. 1: eine perspektivische Ansicht einer Ausführungsform der erfindungsgemäßen Steckdosen-Anordnung;
- Fig. 2: eine perspektivische Ansicht eines zu der in Fig. 1 dargestellten Steckdoseneinheit gehörigen Abdeckrahmens gemäß einer Ausführungsform der erfindungsgemäßen Steckdosen-Anordnung;
- Fig. 3: eine perspektivische Ansicht einer Ausführungsform der erfindungsgemäßen Steckdosen-Anordnung aus der in Fig. 1 dargestellten Steckdoseneinheit und dem in Fig. 2 dargestellten Abdeckrahmens;
- Fig. 4: eine perspektivische Schnittdarstellung der in Fig. 3 gezeigten erfindungsgemäßen Steckdosen-Anordnung;
- Fig. 5: eine perspektivische Darstellung der in den Fig. 3 und 4 dargestellten erfindungsgemäßen Steckdosen-Anordnung in einem in einen Geräteeinbaukanal eingesetzten Zustand.

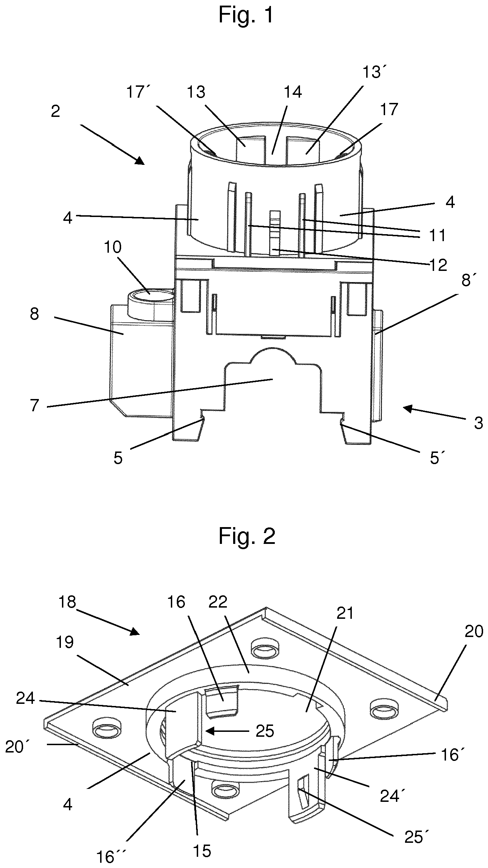

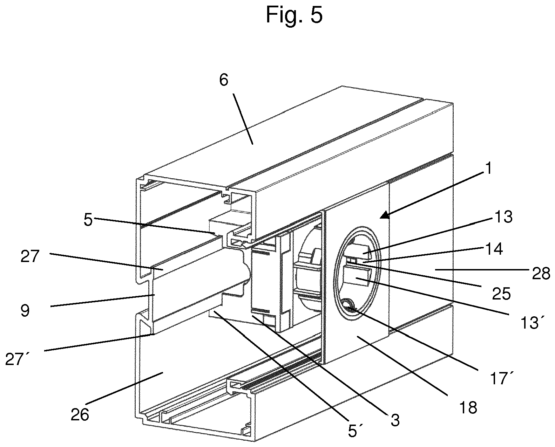

Ein Bestandteil der erfindungsgemäßen Steckdosen-Anordnung 1 der vorliegenden Erfindung, nämlich die Steckdoseneinheit 2 ist in Fig. 1 in einer Ausführungsform in einer perspektivischen Ansicht gezeigt. Im grundsätzlichen Aufbau beinhaltet die Steckdoseneinheit 2 einen Steckdosensockel 3 und einen Steckdosentopf 4. Der Steckdosentopf 4 ist mit dem Steckdosensockel 3 verbunden. In bevorzugten Ausführungsformen sind der Steckdosensockel 3 und der Steckdosentopf 4 formschlüssig und/oder kraftschlüssig, insbesondere über eine Rastverbindung miteinander verbunden. Alternativ dazu ist es auch möglich, dass der Steckdosentopf 4 mit dem Steckdosensockel 3 stoffschlüssig verbunden, besonders bevorzugt einstückig mit diesem ausgebildet ist. Der Steckdosensockel 3 wird durch einen einseitig offenen Quader gebildet, wobei die offene Seite an der dem Steckdosentopf 4 gegenüberliegenden Seite angeordnet ist. An zwei an die offene Seite des Steckdosensockels 3 angrenzenden Seiten weist der Steckdosensockel 3 Halteelemente 5, 5' auf, durch die die Steckdoseneinheit 2 im erfindungsgemäßen Geräteeinbaukanal 6 festgelegt wird (vgl. Fig. 5). Oberhalb der Halteelemente 5, 5' ist auf zwei gegenüberliegenden Seiten des Steckdosensockels 3 eine Ausnehmung 7 in den Steckdosensockel 3 eingebracht, durch die Kabel für die Stromversorgung der Steckdosen-Anordnung geführt sein können. An den beiden anderen, an die offene Seite des Steckdosensockels 3 angrenzenden Seiten weist der Steckdosensockel 3 Verbreiterungen 8,8' auf, in denen Verriegelungsmittel aufgenommen sind, durch die die Steckdoseneinheit 2 an einer Halteschiene 9 des Geräteeinbaukanals 6 arretiert werden kann. Die Betätigung der Verriegelungselemente erfolgt durch Drehen eines in der Verbreiterung 8' vorhandenen Öffnung 10 aufgenommenen Exzenterbolzens.

Der auf den Steckdosensockel 3 aufgerastete Steckdosentopf 4 besitzt eine im Wesentlichen zylindrische Form, wobei an zwei diametral am Außenumfang des Zylinders gelegenen Positionen Führungsaufnahmen 11 angeordnet sind, die jeweils als zwei am Steckdosentopf 4 angeordnete, voneinander beabstandete und vorzugsweise zueinander parallele Stege ausgebildet sind. Etwa in der Mitte dieser beiden Stege befindet sich jeweils eine Rastaufnahme 12, die in der in Fig. 1 dargestellten Ausführungsform der Steckdoseneinheit 2 als etwa rechteckige Ausnehmung im Steckdosentopf 4 ausgebildet ist. An der zylindrischen Innenwand des Steckdosentopfes 4 sind Codierungselemente 13, 13', 13", 13"' angeordnet, wobei jeweils zwei der Codierungselemente 13, 13' und 13", 13"' eine Nut 14, 14' bilden, in der die Führungsleisten des in den Steckdosentopf 4 einzuführenden Steckers aufnehmbar sind. Dabei sind die Codierungselemente 13, 13', 13", 13"' derart am Innenumfang des Steckdosentopfes 4 angeordnet, dass die beiden am Steckdosentopf 4 einander diametral gegenüberliegenden Rastaufnahmen 12, 12' jeweils etwa mittig in den Nuten 14, 14' angeordnet sind. Etwa um 90° zu den Rastaufnahmen 12, 12' versetzt befinden sich an der Innenseite des Steckdosentopfes 4 weitere Ausnehmungen, in denen Schutzkontaktfederzungen 17, 17' angeordnet sind. In den Boden des Steckdosentopfes 4 sind zwei weitere Ausnehmungen eingebracht, durch die die Steckerstifte des in den Steckdosentopf 4 einzuführenden Steckers führbar sind.

Fig. 2 zeigt eine perspektivische Ansicht auf den Abdeckrahmen 18, der in der dargestellten Ausführungsform zu der in Fig. 1 gezeigten Ausführungsform der Steckdoseneinheit 2 kompatibel ist und zusammen mit dieser die erfindungsgemäße Steckdosen-Anordnung 1 bildet. Der Abdeckrahmen 18 umfasst eine im Wesentlichen rechtwinklige Abdeckplatte 19, wobei an zwei gegenüberliegenden Seiten der Abdeckplatte 19 im Wesentlichen rechtwinklig dazu angeordnete Randleisten 20, 20' angeformt sind. Etwa im Zentrum der Abdeckplatte 19 befindet sich eine kreisförmige Durchführungsöffnung 21, die von einer Umrandung 22 eingefasst ist. Die Breite und die Tiefe der Umrandung 22 sind dabei derart gewählt, dass sie zur Aufnahme eines mit dem Abdeckrahmen 18 vorzugsweise rastend verbundenen Farbcodierungsrings 15 geeignet sind. Symmetrisch entlang einer Seite des Umfangs des Farbcodierungsrings 15 sind drei Haltelaschen 16, 16', 16" angeordnet, durch die der Farbcodierungsring am Steckdosentopf 4 fixiert ist. Die Haltelaschen 16, 16', 16" sind durch drei entsprechend angeordnete Ausnehmungen in der Umrandung 22 des Abdeckrahmens 18 geführt.

An zwei einander diametral gegenüberliegenden Stellen der Umrandung sind Führungselemente 24, 24' angeordnet, die in der dargestellten Ausführungsform als Führungslaschen ausgebildet sind. In der gezeigten Ausführungsform ist die Position der Führungselemente 24, 24' an der Umrandung 22 so gewählt, dass die Außenseiten der jeweiligen Führungselemente 24, 24' in etwa zur Mitte der Randleisten freien Seiten der Abdeckplatte 19 zeigen. Die Führungselemente 24, 24' sind so ausgestaltet, dass sie beim Aufsetzen des Abdeckrahmens 18 auf die Steckdoseneinheit 2 in die Führungsaufnahme 11 der Steckdoseneinheit 2 aufgenommen werden. Etwa in der Mitte der Führungselemente 24, 24' ist jeweils an der zur Öffnung 21 weisenden Seite ein Rastelement 25, 25' angeordnet, das beim Aufsetzen des Abdeckrahmens 18 auf die Steckdoseneinheit 2 unter Bildung der erfindungsgemäßen Steckdosen-Anordnung 1 in die jeweilige Rastaufnahme 12, 12' des Steckdosensockels 3 eingreift und somit eine Rastverbindung zwischen dem Abdeckrahmen 18 und der Steckdoseneinheit 2 gebildet wird.

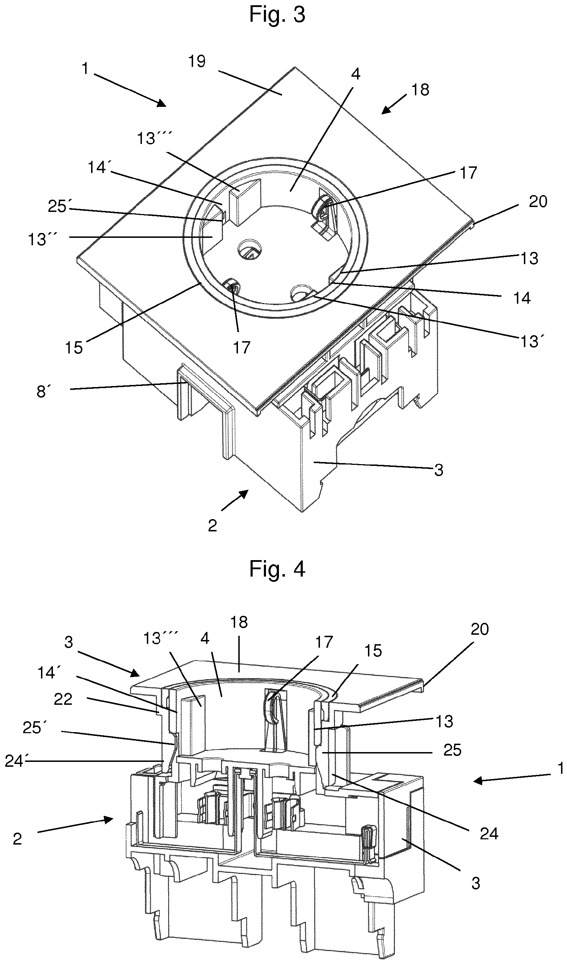

Die auf diese Weise gebildete erfindungsgemäße Steckdosen-Anordnung 1 ist in Fig. 3 in einer perspektivischen Darstellung gezeigt. Neben den am Boden des Steckdosentopfes 4 angeordneten Ausnehmungen für die Steckerstifte des in den Steckdosentopf einzuführenden Steckers ist in Fig. 3 gut das Rastelement 25' zu erkennen, das in die Nut 14 eingreift, die zwischen den beiden Codierungselementen 13, 13' gebildet wird.

Zur anschaulichen Darstellung der Rastverbindung zwischen dem Abdeckrahmen 18 und der Steckdoseneinheit 2 ist die in Fig. 1 gezeigte erfindungsgemäße Steckdosen-Anordnung 1 in Fig. 4 in einer perspektivischen Schnittdarstellung gezeigt. Diese Schnittdarstellung zeigt die Aufnahme der Rastelemente 25, 25' in den entsprechenden Rastaufnahmen 12, 12' des Steckdosentopfes 4. Darüber hinaus ist die Lage des Farbcodierungsrings 15 zwischen dem Steckdosentopf 4 und dem Abdeckrahmen 18 gezeigt, wobei der Farbcodierungsring 15 in die Umrandung 22 der Öffnung 21 des Abdeckrahmens 18 aufgenommen ist.

Fig. 5 zeigt einen Geräteeinbaukanal 6, in den die in Fig. 3 und Fig. 4 gezeigte Ausführungsform der erfindungsgemäßen Steckdosen-Anordnung 1 eingesetzt ist. Am Boden 26 des Geräteeinbaukanals 6 befindet sich eine zur Rückseite des Geräteeinbaukanals 6 hin offene Halteschiene 9, die in der in Fig. 5 gezeigten Ausführungsform als Hutschiene 9 ausgebildet ist. Die Hutschiene 9 weist an beiden Seiten sich in Längsrichtung des Geräteeinbaukanals 6 erstreckende Verbindungselemente 27, 27' auf, die mit den Halteelementen 5, 5' der Steckdoseneinheit 2 der erfindungsgemäßen Steckdosen-Anordnung 1 im Eingriff stehen und so die erfindungsgemäße Steckdosen-Anordnung in dem Geräteeinbaukanal 6 fixieren.

Zur Montage der erfindungsgemäßen Steckdosen-Anordnung 1 in dem Geräteeinbaukanal 6 wird beispielsweise zunächst das Halteelement 5 der erfindungsgemäßen Steckdosen-Anordnung 1 über das Verbindungselement 27 des Geräteeinbaukanals 6 geführt und die beispielsweise als vorverdrahtete elektrische Netzsteckdose ausgeführte Steckdoseneinheit 2 wird in Richtung des Kanalbodens 26 gedrückt, so dass das zweite Halteelement 5' über das weitere Verbindungselement 27' der Halteschiene 9 gleitet und so die Steckdoseneinheit an der Halteschiene 9 vorfixiert. Die Steckdoseneinheit 2 wird nun durch Verschieben entlang der Hutschiene 9 des Geräteeinbaukanals in die gewünschte horizontale Position geführt. Dann wird der in der Öffnung 10 der Verbreiterung 8 angeordnete Exzenterbolzen gedreht, wodurch ein Verriegelungsmechanismus in die Halteschiene 9 eingreift und so die Position der Steckdoseneinheit 2 fixiert. Abschließend wird der Abdeckrahmen 18 auf den Steckdosentopf 4 der Steckdoseneinheit 2 aufgerastet, wobei die an den Führungselementen 24, 24' angeordneten Rastelemente 25, 25' in die Rastaufnahmen 12, 12' des Steckdosentopfes 4 eingreifen. Die Randleisten 20, 20' des Abdeckrahmens 18 greifen dabei in den Randbereich der Öffnung an der Oberseite des Geräteeinbaukanals 6 ein. Letztlich wird der Kabelkanal durch rastendes Einsetzen eines Deckelelements 28 in die Deckelaufnahme 29 des Geräteeinbaukanals 6 verschlossen.

## Patentansprüche

1. Steckdosen-Anordnung (1) für Geräteeinbaukanäle (6) mit einer Halteschiene (9) am Kanalboden (26), wobei die Steckdosen-Anordnung (1) eine Steckdoseneinheit (2) mit Steckdosensockel (3) und damit verbundenem Steckdosentopf (4) sowie einen Abdeckrahmen (18) umfasst, der über eine Rastverbindung an der Steckdoseneinheit (2) festlegbar ist,
**dadurch gekennzeichnet, dass**
die Rastverbindung durch an den Abdeckrahmen (18) angeformte Rastelemente (25, 25') erfolgt, die in entsprechende Rastaufnahmen (12, 12') des Steckdosentopfes (4) eingreifen
oder
die Rastverbindung durch an den Steckdosentopf (4) angeformte Rastelemente erfolgt, die in entsprechende Rastaufnahmen des Abdeckrahmens (18) eingreifen.

2. Steckdosen-Anordnung (1) für Geräteeinbaukanäle (14) nach Anspruch 1, **dadurch gekennzeichnet, dass** die Steckdoseneinheit (2) als vorverdrahtete, elektrische Netzsteckdose ausgebildet ist.

3. Steckdosen-Anordnung (1) für Geräteeinbaukanäle (14) nach Anspruch 1 oder Anspruch 2, **dadurch gekennzeichnet, dass** der Abdeckrahmen zwei am Rand einer Öffnung (21) des Abdeckrahmens (18) einander diametral gegenüberliegende Führungselemente (24,24') umfasst, die in entsprechende Führungsaufnahmen (11) des Steckdosentopfes (4) einführbar sind.

4. Steckdosen-Anordnung (1) für Geräteeinbaukanäle (14) nach Anspruch 3, **dadurch gekennzeichnet, dass** die Rastelemente (25, 25') an den Führungselementen (24, 24') des Abdeckrahmens (18) angeordnet sind.

5. Steckdosen-Anordnung (1) für Geräteeinbaukanäle (6) nach einem der Ansprüche 1 bis 4, **dadurch gekennzeichnet, dass** die Rastaufnahmen (12, 12') des Steckdosentopfes (2) zur Aufnahme der Rastelemente (25, 25') jeweils in einer Nut (14, 14') zwischen zwei Codierungselementen (13, 13', 13", 13"') des Steckdosentopfes (4) angeordnet sind.

6. Steckdosen-Anordnung (1) für Geräteeinbaukanäle (6) nach einem der Ansprüche 1 bis 5, **dadurch gekennzeichnet, dass** sie weiter einen Farbcodierungsring (15) umfasst, der den Steckdosentopf (4) umringt.

7. Geräteeinbaukanal (6) mit einer Halteschiene (9) am Kanalboden (26), der mindestens eine Steckdosen-Anordnung (1) für Geräteeinbaukanäle (6) gemäß einem der Ansprüche 1 bis 6 umfasst.

8. Geräteeinbaukanal (6) nach Anspruch 7, **dadurch gekennzeichnet, dass** die Steckdoseneinheit (2) an ihrer dem Steckdosentopf (4) gegenüber liegenden Seite mindestens ein Halteelement (5, 5') aufweist, durch das/die die Steckdoseneinheit (2) an der Halteschiene (13) des Geräteeinbaukanals (14) festlegbar ist.

9. Geräteeinbaukanal (14) nach Anspruch 8, **dadurch gekennzeichnet, dass** die Halteschiene (9) als Hutschiene (9) ausgebildet ist und die Halteelemente (5, 5') die Hutschiene (9) umgreifen.

## Claims

1. Socket arrangement (1) for device-installation channels (6) having a retaining rail (9) on the channel floor (26), wherein the socket arrangement (1) comprises a socket unit (2), with a socket base (3) and a socket outlet (4) connected thereto, and also a covering frame (18), which can be secured on the socket unit (2) via a latching connection,
**characterized in that**
the latching connection is achieved by latching elements (25, 25') which are integrally formed on the covering frame (18) and engage in corresponding latching mounts (12, 12') of the socket outlet (4),
or
the latching connection is achieved by latching elements which are integrally formed on the socket outlet (4) and engage in corresponding latching mounts of the covering frame (18).

2. Socket arrangement (1) for device-installation channels (14) according to Claim 1, **characterized in that** the socket unit (2) is designed in the form of a prewired electric power socket.

3. Socket arrangement (1) for device-installation channels (14) according to Claim 1 or Claim 2, **characterized in that** the covering frame comprises two guide elements (24, 24') which are located diametrically opposite one another on the periphery of an opening (21) in the covering frame (18) and can be introduced into corresponding guide mounts (11) of the socket outlet (4).

4. Socket arrangement (1) for device-installation channels (14) according to Claim 3, **characterized in that** the latching elements (25, 25') are arranged on the guide elements (24, 24') of the covering frame (18).

5. Socket arrangement (1) for device-installation channels (6) according to one of Claims 1 to 4, **characterized in that** the latching mounts (12, 12') of the socket outlet (2) for accommodating the latching elements (25, 25') are each arranged in a groove (14, 14') between two coding elements (13, 13', 13", 13"') of the socket outlet (4).

6. Socket arrangement (1) for device-installation channels (6) according to one of Claims 1 to 5, **characterized in that** it also comprises a colour-coding ring (15) which encircles the socket outlet (4).

7. Device-installation channel (6) having a retaining rail (9) on the channel floor (26) and comprising at least one socket arrangement (1) for device-installation channels (6) according to one of Claims 1 to 6.

8. Device-installation channel (6) according to Claim 7, **characterized in that**, on its side which is located opposite the socket outlet (4), the socket unit (2) has at least one retaining element (5, 5'), by means of which the socket unit (2) can be secured on the retaining rail (13) of the device-installation channel (14).

9. Device-installation channel (14) according to Claim 8, **characterized in that** the retaining rail (9) is designed in the form of a top-hat rail (9) and the retaining elements (5, 5') engage around the top-hat rail (9).

## Revendications

1. Agencement de prise (1) pour canaux d'intégration d'appareils (6) comportant un rail de maintien (9) sur le fond de canal (26), dans lequel l'agencement de prise (1) comprend une unité à prise (2) ayant un socle de prise (3) et un manchon de prise (4) relié à celui-ci, ainsi qu'un châssis de recouvrement (18) qui peut être fixé par l'intermédiaire d'une liaison par encliquetage à l'unité à prise (2),
**caractérisé en ce que** la liaison par encliquetage est effectuée par l'intermédiaire d'éléments d'encliquetage (25, 25') formés sur le châssis de recouvrement (18), lesquels éléments d'encliquetage s'engagent dans des évidements d'encliquetage (12, 12') correspondants du manchon de prise (4),
ou la liaison par encliquetage est effectuée par l'intermédiaire d'éléments d'encliquetage formés sur le manchon de prise (4), lesquels éléments d'encliquetage s'engagent dans des évidements d'encliquetage correspondants du châssis de recouvrement (18).

2. Agencement de prise (1) pour canaux d'intégration d'appareils (14) selon la revendication 1, **caractérisé en ce que** l'unité à prise (2) est réalisée sous la forme d'un connecteur de réseau électrique précâblé.

3. Agencement de prise (1) pour canaux d'intégration d'appareils (14) selon la revendication 1 ou la revendication 2, **caractérisé en ce que** le châssis de recouvrement comprend deux éléments de guidage (24, 24') diamétralement opposés l'un à l'autre sur le pourtour d'une ouverture (21) du châssis de recouvrement (18), lesquels éléments de guidage peuvent être insérés dans des évidements de guidage (11) correspondants du manchon de prise (4).

4. Agencement de prise (1) pour canaux d'intégration d'appareils (14) selon la revendication 3, **caractérisé en ce que** les éléments d'encliquetage (25, 25') sont disposés sur les éléments de guidage (24, 24') du châssis de recouvrement (18).

5. Agencement de prise (1) pour canaux d'intégration d'appareils (6) selon l'une quelconque des revendications 1 à 4, **caractérisé en ce que** les évidements d'encliquetage (12, 12') du manchon de prise (2) sont respectivement disposés dans une rainure (14, 14') entre deux éléments de codage (13, 13', 13", 13"') du manchon de prise (4) pour la réception des éléments d'encliquetage (25, 25').

6. Agencement de prise (1) pour canaux d'intégration d'appareils (6) selon l'une quelconque des revendications 1 à 5, **caractérisé en ce qu'**il comprend en outre un anneau de codage coloré (15) qui entoure le manchon de prise (4).

7. Canal d'intégration d'appareil (6) comportant un rail de maintien (9) sur un fond de canal (26) comprenant au moins un agencement de prise (1) pour canaux d'intégration d'appareils (6) selon l'une quelconque des revendications 1 à 6.

8. Canal d'intégration d'appareil (6) selon la revendication 7, **caractérisé en ce que** l'unité à prise (2) présente sur son côté situé à l'opposé du manchon de prise (4) au moins un élément de maintien (5, 5') au moyen duquel ou desquels l'unité à prise (2) peut être fixée au rail de maintien (13) du canal d'intégration d'appareil (14).

9. Canal d'intégration d'appareil (14) selon la revendication 8, **caractérisé en ce que** le rail de maintien (9) est réalisé sous la forme d'un rail profilé (9) et **en ce que** les éléments de maintien (5, 5') enserrent le rail profilé (9).
